# EUROPEAN PATENT APPLICATION

(11) **EP 4 772 782 A1**
(43) Date of publication of application: **08.07.2026**
(21) Application number: 23950505.0
(22) Date of filing: 05.12.2023
(51) Int. Cl.: F16K 15/06

(54) **CHECK VALVE ASSEMBLY AND LIQUID HYDROGEN PUMP MOUNTING FLANGE COMPRISING SAME**

(30) Priority: 30.08.2023 CN 202311108012
(71) Applicant: China Energy Investment Corporation Limited, Beijing 100011 (CN); National Institute of Clean-and-Low-Carbon Energy, Beijing 102211 (CN)
(72) Inventor: ZHANG, Feng, Beijing 102211 (CN); WANG, Xiaohuan, Beijing 102211 (CN); LI, Chufu, Beijing 102211 (CN); HE, Guangli, Beijing 102211 (CN); LI, Xuan, Beijing 102211 (CN); ZHANG, Xin, Beijing 102211 (CN); XIONG, Xue, Beijing 102211 (CN); CAI, Xingye, Beijing 102211 (CN); CUI, Xin, Beijing 102211 (CN); DU, Wandou, Beijing 102211 (CN); GAO, Haohua, Beijing 102211 (CN)
(74) Representative: Forresters IP LLP
(86) International application number: PCT/CN2023/136586
(87) International publication number: WO 2025/043937

(57) **Abstract**

A check valve assembly and a liquid hydrogen pump mounting flange comprising same. The check valve assembly comprises: a pilot valve; a limiting guide frame, the limiting guide frame comprising a limiting frame and at least two guide rods which are uniformly distributed along the limiting frame; a sealing valve, the sealing valve being movably connected to the guide rods, and being able to reciprocate, along the guide rods, between the limiting frame and a position to be sealed; and at least two elastic telescopic pieces, the elastic telescopic pieces being sleeved on the guide rods, the sealing valve abutting against the elastic telescopic pieces, the sealing valve being transmittingly connected to the pilot valve, and the pilot valve being closed, so as to adjust the elastic force of the elastic telescopic pieces, and drive the sealing valve to be closed. The check valve assembly and the liquid hydrogen pump mounting flange comprising same can prevent the service life of parts in hydraulic compression cylinders and the service life of liquid hydrogen pumps from being affected by cavitation caused by a fluid force during opening and closing.

## Description

### TECHNICAL FIELD

The present application relates to the field of drive device technologies, and more particularly, to a check valve assembly and a liquid hydrogen pump mounting flange including the same.

### BACKGROUD OF THE INVENTION

A liquid hydrogen pump is installed inside a liquid hydrogen storage tank and connected to the liquid hydrogen storage tank via piping, enabling the transfer of liquid hydrogen. The liquid hydrogen pump features a submerged design, for example, including a hydraulic end (i.e., a cold end) and a drive end. The cold end is placed in the liquid hydrogen storage tank and fully immersed in the liquid hydrogen. The drive end is placed outside the liquid hydrogen storage tank. The submerged liquid hydrogen pump greatly reduces a total evaporation loss of hydrogen, and may also be hydrogenated immediately as needed, which is very suitable for a cyclic operation that is frequently started and stopped within one hour.

The cold end of the liquid hydrogen pump is a hydraulic compression cylinder structure. During the liquid hydrogen intake phase, an inlet check valve is opened and an outlet check valve is closed. In a process of compressing the liquid hydrogen, the inlet check valve is closed and the check valve is opened, so that the liquid hydrogen is transported out and discharged in a high-pressure state through the outlet check valve under the pushing of a piston.

During the intake of the liquid hydrogen, the check valve is opened by a fluid force. When the check valve is opened, there may be a pressure difference on both sides of the check valve, while the pressure difference may cause a small part of liquid hydrogen entering the hydraulic compression cylinder to vaporize. Then, when the piston compresses the liquid hydrogen, due to the increase of pressure, the original vaporized hydrogen at a saturation temperature may be liquefied again after being compressed, and bubbles may disappear, resulting in cavitation on parts in the hydraulic compression cylinder.

Therefore, it is necessary to provide a check valve assembly and a liquid hydrogen pump mounting flange including same to solve the above-mentioned problems.

### SUMMARY OF THE INVENTION

In view of the above, the present application aims to provide a check valve assembly and a mounting flange for a liquid hydrogen pump incorporating the same, in order to address the issue where fluid forces generated during the opening and closing of the check valve cause cavitation within the hydraulic compression cylinder, thereby affecting its service life.

To achieve the above objective, the present application provides a check valve assembly comprising:
a pilot valve;
a limiting guide frame, comprising a limiting frame and at least two guide rods which are evenly distributed along the limiting frame;
a sealing valve, wherein the sealing valve is movably connected to the guide rods, and is able to reciprocate along the guide rods and between the limiting frame and a position to be sealed; and
at least two elastic telescopic pieces, wherein the elastic telescopic pieces are sleeved on the guide rods, the sealing valve abuts against the elastic telescopic pieces, the sealing valve is transmittingly connected to the pilot valve, and the pilot valve is closed to adjust elastic forces of the elastic telescopic pieces, and drive the sealing valve to be closed.

In some embodiments, the pilot valve comprises a transmission rod and two valve flaps symmetrically arranged along the transmission rod, one end of the transmission rod is connected to the sealing valve, and the two valve flaps are both rotatably connected to the other end of the transmission rod.

In some embodiments, the transmission rod is provided with a limiting part, and the limiting part is used for limiting the valve flap to rotate within a preset range.

In some embodiments, a surface on one side of the valve flap back to the transmission rod is provided with at least one reinforcing rib.

In some embodiments, when extending directions of the two valve claps are in a straight line, the reinforcing ribs on the two valve claps abut against each other.

In some embodiments, the limiting frame comprises a limiting body and at least two fixing legs evenly distributed along the limiting body, the limiting body is provided with at least two guide holes evenly distributed along the limiting body, and the guide rods are arranged in the guide holes; a gap is arranged between the adjacent fixing legs; and the limiting body is connected to a specified position through the fixing legs.

In some embodiments, the limiting body is provided with an avoidance hole.

In some embodiments, the sealing valve comprises a sealing body and at least two moving legs evenly distributed along the sealing body, and the sealing body is provided with a pressure-bearing sealing surface; and the sealing body is movably connected to the guide rod through the moving leg.

The present application also provides a liquid hydrogen pump mounting flange, comprising:
the said check valve assembly;
a mounting flange, wherein the mounting flange is provided with an inlet channel extending along an axial direction, the inlet channel comprises an inlet end and an outlet end which are oppositely arranged, and the pilot valve and the sealing valve of the check valve assembly are respectively arranged at the inlet end and the outlet end.

In some embodiments, the pilot valve comprises two valve flaps, and when extending directions of the two valve claps are in a straight line, the valve flaps have gaps with an edge of the inlet end.

As can be seen from the above, the check valve assembly provided in the present application and the mounting flange for a liquid hydrogen pump incorporating the same offer the following advantages over the prior art: By employing the aforementioned check valve assembly, which includes a sealing valve and a pilot valve respectively disposed at the inlet end and the outlet end of the channel, the following is achieved: when the pilot valve closes, it overcomes the elastic force of an elastic telescopic pieces to pull the sealing valve, thereby sealing the channel; when the pilot valve opens, the elastic telescopic pieces returns to its initial state, allowing the sealing valve to move upward and unseal the channel. The pilot valve serves as a leading structure for the closure of the sealing valve, reducing the difficulty of sealing the channel by the sealing valve. Due to the differences in weight and sensitivity between the pilot valve and the sealing valve, the fluid dynamic force required to actuate the pilot valve is less than that needed to directly actuate the sealing valve, and the closure of the pilot valve directly pulls the sealing valve downward. Consequently, the check valve assembly not only utilizes elastic force instead of fluid dynamic force as the driving force to open the sealing valve, thereby avoiding cavitation that affects service life, but also enables the pilot valve to drive the sealing valve to close significantly faster than conventional check valves. Moreover, since the pilot valve closes prior to the sealing valve, the amount of liquid hydrogen leaking from the hydraulic compression cylinder during the sealing valve's closure process is further reduced.

### DESCRIPTION OF THE DRAWINGS

The above features and technical advantages of the present application will become clearer and easier to understand by describing the embodiments thereof with the drawings.
FIG. 1 is a schematic diagram showing a closed state of a check valve assembly adopted in a first embodiment of the present application.
FIG. 2 is a schematic diagram showing an open state of the check valve assembly shown in FIG. 1.
FIG. 3 is a schematic diagram of a limiting guide frame shown in FIG. 1.
FIG. 4 is a side view of the limiting guide frame shown in FIG. 3.
FIG. 5 is a schematic diagram of a sealing valve shown in FIG. 1.
FIG. 6 is a schematic diagram of a sealing valve shown in FIG. 1 and a structure below the sealing valve.
FIG. 7 is a partial enlarged view showing a part A of the sealing valve shown in FIG. 6 and the structure below the sealing valve.
FIG. 8 is a side view of the sealing valve shown in FIG. 7 and the structure below the sealing valve.
FIG. 9 is a schematic diagram showing a closed state of a check valve assembly adopted in a second embodiment of the present application.
FIG. 10 is a schematic diagram showing an open state of the check valve assembly shown in FIG. 9.
FIG. 11 is a schematic diagram showing a reset mode of the check valve assembly shown in FIG. 9.
FIG. 12 is a schematic diagram of a limiting guide frame shown in FIG. 9.
FIG. 13 is a side view of the limiting guide frame shown in FIG. 12.
FIG. 14 is a partial enlarged view of the sealing valve shown in FIG. 9 and the structure below the sealing valve.
FIG. 15 is a side view of the sealing valve shown in FIG. 14 and the structure below the sealing valve.

### Reference numerals:

1 - mounting flange; 2 - hydraulic compression cylinder; 3 - piston; 4 - spring; 5 - limiting guide frame; 5-1 - first limiting guide frame; 6 - pressure-bearing sealing surface; 7 - sealing valve; 8 - guide hole; 9 - bolt hole; 10 - transmission rod; 10-1 - first transmission rod; 11 - valve flap; 12 - reinforcing rib; 13 - limiting strip; 14 - rotating shaft; 15 - outlet channel; and 16 - inlet channel.

### DESCRIPTION OF EXEMPLARY EMBODIMENTS

To make the objects, technical solutions, and advantages of the present application clearer, the following further describes the present application in detail with reference to the specific embodiments and accompanying drawings. Same parts are denoted by same reference numerals. It should be noted that the words "front", "rear", "left", "right", "upper" and "lower" used in the following description refer to the directions in the drawings. The terms "inside" and "outside" are used to refer to a direction towards or away from a geometric center of a specific part, respectively.

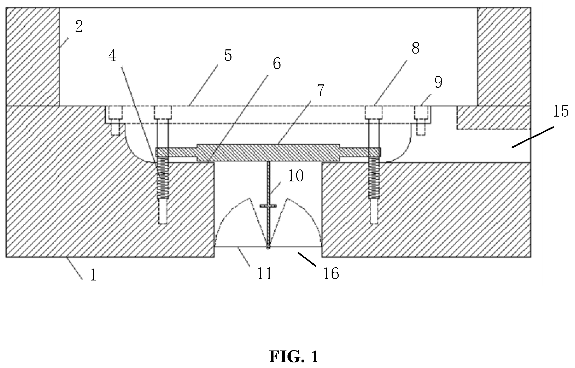

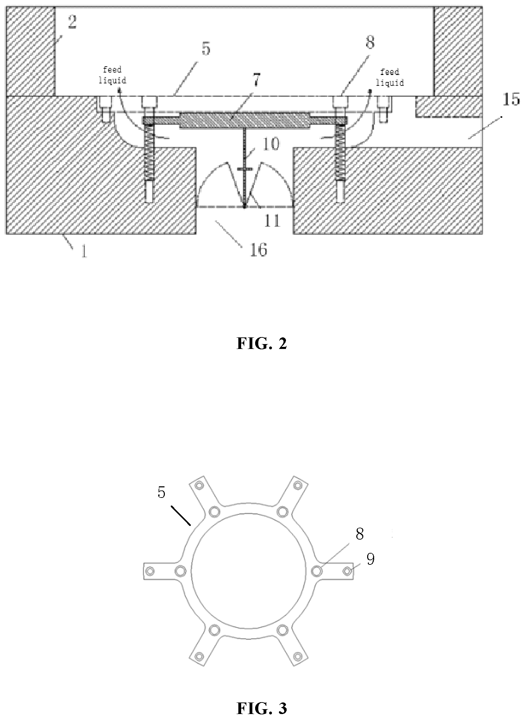

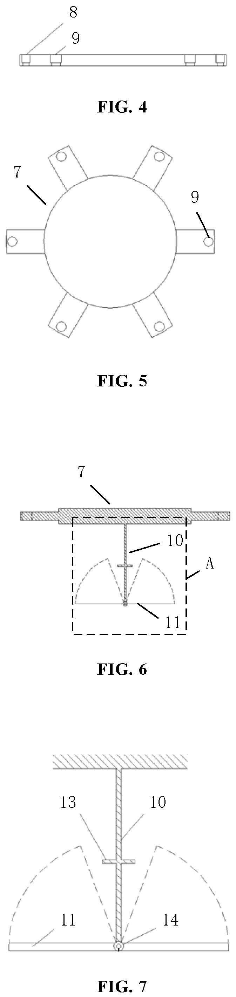

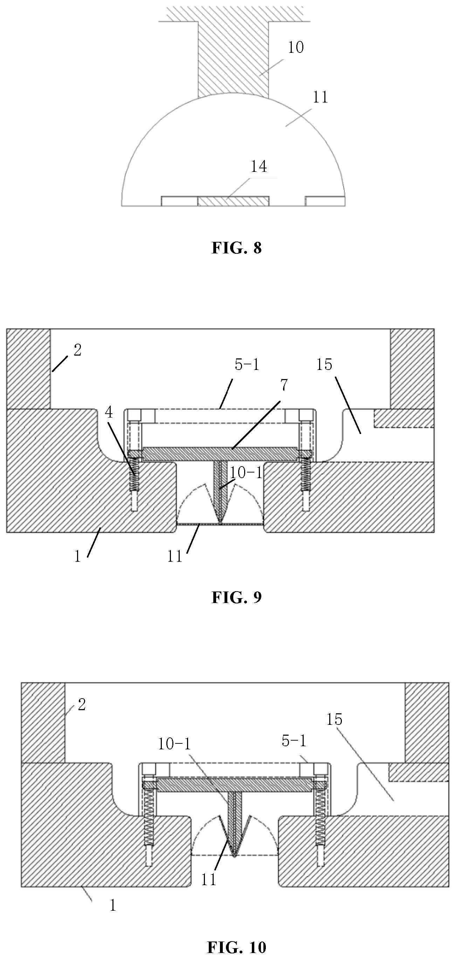

FIG. 1 is a schematic diagram showing a closed state of a check valve assembly adopted in a first embodiment of the present application. FIG. 2 is a schematic diagram showing an open state of the check valve assembly shown in FIG. 1. FIG. 3 is a schematic diagram of a limiting guide frame shown in FIG. 1. FIG. 4 is a side view of the limiting guide frame shown in FIG. 3. FIG. 5 is a schematic diagram of a sealing valve shown in FIG. 1. FIG. 6 is a schematic diagram of a sealing valve shown in FIG. 1 and a structure below the sealing valve. FIG. 7 is a partial enlarged view showing a part A of the sealing valve shown in FIG. 6 and the structure below the sealing valve. FIG. 8 is a side view of the sealing valve shown in FIG. 7 and the structure below the sealing valve. As shown in FIG. 1 to FIG. 8, the check valve assembly includes a pilot valve, a limiting guide frame 5, a sealing valve 7 and at least two of elastic telescopic pieces.

The check valve assembly includes the pilot valve. The pilot valve can affect a closing speed of the sealing valve 7, that is, the pilot valve has less mass and better lightness than the sealing valve 7. When the pilot valve is closed, the pilot valve assists or controls rapid closing of the sealing valve 7.

The limiting guide frame 5 includes a limiting frame and at least two guide rods which are evenly distributed along the limiting frame. One end of a hydraulic compression cylinder 2 is provided with a mounting flange 1, and the limiting frame is usually arranged on the mounting flange 1 or at a contact surface between the mounting flange 1 and the hydraulic compression cylinder 2. The limiting frame can prevent the pilot valve and the sealing valve 7 from moving into the hydraulic compression cylinder 2, so as to limit moving ranges of the two. At least two guide rods are provided, and a plurality of guide rods are evenly distributed along a circumferential direction of the limiting frame.

The sealing valve 7 is movably connected to the guide rod and can reciprocate between the limiting frame and a position to be sealed along the guide rod. The sealing valve 7 abuts against the position to be sealed to realize a sealing function. The sealing valve 7 is far away from the position to be sealed, thus realizing an unsealing function. The guide rod is used to guide movement of the sealing valve 7, and the limiting frame is used to limit a maximum moving distance of the sealing valve 7.

The elastic telescopic pieces are sleeved on the guide rods, the sealing valve 7 abuts against the elastic telescopic pieces, the sealing valve 7 is transmittingly connected to the pilot valve, and the pilot valve is closed to adjust elastic forces of the elastic telescopic pieces, and drive the sealing valve 7 to be closed. The elastic telescopic piece is sleeved on the guide rod, a bottom end of the elastic telescopic piece can abut against a relative lower part of the position to be sealed, and a top end of the elastic telescopic piece can abut against the sealing valve 7. When the pilot valve is switch from an open state to a closed state, the elastic force of the elastic telescopic piece is overcome, and the sealing valve 7 is pulled to move and abut against the position to be sealed. When the pilot valve is switch from a closed state to an open state, the elastic telescopic piece is reset, to push the sealing valve 7 to leave the position to be sealed.

The mounting flange 1 is connected between the hydraulic compression cylinder 2 and a liquid hydrogen storage tank. The mounting flange 1 is provided with an inlet channel 16, and the check valve assembly is arranged at the inlet channel 16, wherein the pilot valve is arranged near an inlet end of the liquid hydrogen storage tank, the sealing valve 7 is arranged near an outlet end of the hydraulic compression cylinder 2, and the position to be sealed is the outlet end. The open of the sealing valve 7 depends on an elastic force, not a fluid force. When the hydraulic compression cylinder 2 starts to suck liquid hydrogen, a piston 3 in the hydraulic compression cylinder 2 is at a relative lower end of the hydraulic compression cylinder 2 and starts to move upward, and an internal pressure of the hydraulic compression cylinder 2 gradually decreases. When the pressure decreases to a threshold slightly greater than a static pressure of the liquid hydrogen storage tank, and a downward pressure of the hydraulic compression cylinder 2 on the sealing valve 7 is less than an upward elastic force of the elastic telescopic piece on the sealing valve 7. The sealing valve 7 moves upward under the elastic force, and the sealing valve 7 unseals the inlet channel 16. The liquid hydrogen in the liquid hydrogen storage tank pushes the pilot valve to open, and the liquid hydrogen passes through the pilot valve and the sealing valve 7 in turn and is automatically press into the hydraulic compression cylinder 2. However, the pressure in the hydraulic compression cylinder is always greater than or equal to the static pressure of the liquid hydrogen storage tank, and the liquid hydrogen at a saturation temperature may not vaporize, while zero vaporization ensures zero cavitation. The elastic force provided by the elastic telescopic piece is slightly greater than a gravity of the sealing valve 7, which ensures automatic opening without affecting a time response when closing. During the short pause after the last stroke before the piston 3 compresses the liquid hydrogen, the pilot valve may automatically switch from the open state to the closed state. When the liquid hydrogen is compressed, the piston 3 moves downwards from a top part of the hydraulic compression cylinder 2, and the liquid hydrogen flows downwards under the pushing of the piston 3. Because the pilot valve is in a closed state, the liquid hydrogen acts on the pilot valve, which makes the pilot valve move downwards, pulling the sealing valve 7 to move downwards against the elastic force of the elastic telescopic piece until the sealing valve 7 moves to the position to be sealed, thus forming a high-pressure resistant seal for the inlet channel 16. When the sealing valve 7 is closed, the pilot valve serves as the pilot valve of the sealing valve 7, which can adjust the elastic force and reduce a difficulty of opening and closing the sealing valve 7. At the same time, due to the early closing of the pilot valve, a leakage amount of the liquid hydrogen is reduced, and an excessive amount of liquid passing through the sealing valve 7 during the downward compression of the liquid hydrogen by the piston 3 is avoided.

The above check valve assembly is adopted, the check valve assembly includes the sealing valve 7 and the pilot valve, and the pilot valve and the sealing valve 7 are respectively arranged at the inlet end and the outlet end of the channel. When the pilot valve is closed, the elastic force of the elastic telescopic piece is overcome, and the sealing valve 7 is pulled to move and seal the channel; when the pilot valve is opened, the elastic telescopic piece is in a reset state, and the sealing valve 7 is moved upward to unseal the channel. The pilot valve serves as a pilot structure for closing the sealing valve 7, reducing a difficulty for the sealing valve 7 for sealing the channel; due to weight and sensitivity differences between the pilot valve and the sealing valve 7, a difficulty of using the fluid force to push the pilot valve to move is less than a difficulty of directly pushing the sealing valve 7 to move, while the closing of the pilot valve directly pulls the sealing valve 7 to move downward. Therefore, the check valve assembly not only replaces the fluid force with the elastic force as a driving force for opening the sealing valve 7 to avoid cavitation and affect the service life, but also the pilot valve drives the sealing valve 7 to close much faster than an existing check valve. In addition, because the pilot valve is closed before the sealing valve 7, an amount of liquid hydrogen leaking from the hydraulic compression cylinder 2 during the closing of the sealing valve 7 is also less.

In one embodiment of the present application, the sealing valve 7 is provided with a pressure-bearing sealing surface 6, and the pressure-bearing sealing surface 6 abuts on an edge of the inlet channel 16 to seal the inlet channel 16.

In one embodiment of the present application, the elastic telescopic piece includes, but is not limited to, a spring 4. An elastic force provided by the spring 4 is slightly greater than the gravity of the sealing valve 7, so the spring 4 is relatively less stressed and a mass of the spring is relatively light.

In one embodiment of the present application, the guide rod includes, but is not limited to, a guide bolt. An upper part of the guide bolt is a smooth cylindrical section, which provides a guiding function. The cylindrical section passes through the sealing valve 7 and the spring 4 to guide the sealing valve 7 and the spring 4. A lower part of the guide bolt is a threaded section to provide a fixing function. The threaded section is fixed on the hydraulic compression cylinder or the mounting flange 1.

Alternatively, the pilot valve includes a transmission rod 10 and two valve flaps 11 symmetrically arranged along the transmission rod 10, one end of the transmission rod 11 is connected to the sealing valve 7, and the two valve flaps 11 are both rotatably connected to the other end of the transmission rod 10. The transmission rod 10 passes through the inlet channel 16, a top end of the transmission rod 10 is connected with a center of the sealing valve 7, a bottom end of the transmission rod 10 is provided with a rotating shaft 14, and the valve flap 11 rotates around the rotating shaft 14. The valve flap 11 turns from bottom to top under the action of an external force. When the valve flap 11 is not acted by the external force, the valve flap 11 and the transmission rod 10 are perpendicular to each other. Generally, when the valve flap 11 is subjected to a force from bottom to top, the valve flap 11 flips upward from a horizontal state, transitioning into an open state. When the valve flap 11 is subjected to a gravity or a force from top to bottom, the valve flap 11 flips downward from an inclined state, transitioning into a closed state. The valve flap 11 and the sealing valve 7 are connected together through the transmission rod 10, and rise and fall synchronously. That is, when the valve flap 11 is opened, the sealing valve 7 moves upward. When the valve flap 11 is closed, the sealing valve 7 moves downward. With the above-mentioned pilot valve, because a stress of the valve flap 11 is only to pull the sealing valve 7 and overcome the elastic force of the spring 4, the stress of the valve flap is relatively small, so a mass of the valve flap is far less than that of the sealing valve 7.

In one embodiment of the present application, when the pilot valve is in the closed state, there is a gap between an edge of the valve flap 11 and an inner wall of the inlet channel 16, that is, the pilot valve does not completely seal the inlet channel 16.

In one embodiment of the present application, the valve flap 11 includes, but is not limited to, a double valve flap door, which is similar to a butterfly wing shape. A shape of the valve flap 11 is set according to a shape of the inlet channel 16, such as a cylindrical channel, and the valve flap 11 has two semicircular valve flaps 11. The valve flap 11 is made of a nonmetallic light material, such as plastic valve flap, which is light enough to reduce a driving difficulty, and the valve flap 11 can be driven to move or rotate with a relatively small driving force. The transmission rod 10 includes, but is not limited to, a pulling rib, and a rotating shaft 14 is fixedly installed at a bottom part of the pulling rib. A rotating sleeve matched with the rotating shaft 14 is arranged on the two valve flaps 11 and can rotate around the rotating shaft 14. There is a proper gap between the rotating shaft 14 and the rotating sleeve of the valve flap 11, and the liquid hydrogen provides lubrication to ensure that the valve flap 11 can rotate freely without friction. The force pushing the valve flap 11 to rotate is small enough, and in this case, the driving force driving the pilot valve to open is small enough, and no pressure loss may occur. For example, in the short pause after the last stroke before the piston 3 compresses the liquid hydrogen, the pilot valve may automatically switch from the open state to the closed state, that is, the valve flap 11 in the inclined state may rotate downward under the action of gravity, and the pilot valve may automatically close.

In one embodiment of the present application, the transmission rod 10 includes, but is not limited to a pulling rib. The valve flap 11 does not need to bear a high pressure, the stress of the valve flap 11 is only the elastic force of pulling the sealing valve 7 and the spring 4, so that a thickness of the valve flap 11 can be reduced to reduce a weight of a valve plate. In addition, the valve flap 11 may also be made of metal or nonmetal materials to ensure light weight and quick response of the valve flap. A closing speed of the light valve flap 11 pushed by the fluid force is higher than that of the heavy sealing valve 7 directly, so the pilot valve is adopted, because the valve flap 11 is closed before the sealing valve 7, and the sealing valve 7 is directly pulled to move to the closed position under the push of the liquid hydrogen.

Alternatively, the transmission rod 10 is provided with a limiting part, and the limiting part is used for limiting the valve flap 11 to rotate within a preset range. A maximum downward rotation position of the valve flap 11 is that the valve flap 11 is in a horizontal state. When the valve flap 11 rotates upward, in order to prevent the valve flap 11 from sticking to the transmission rod 10 and reduce the driving difficulty of the valve flap 11, the limiting part is adopted to limit the rotation of the valve flap 11 within a preset range, so as to keep a certain included angle between the valve flap 11 and the transmission rod 10, which is convenient for the fluid force to drive the valve flap 11 to rotate downward. The limiting part makes the valve flap 11 rotate to an appropriate angle for closing. Under normal circumstances, when the piston 3 moves upward to an upper end point and the suction ends, the valve flap 11 may rotate and fall by a gravity thereof to become a closed state. If a residence time of the piston 3 is short, the valve flap 11 may be quickly closed at the beginning of the compression process under the push of the downward compressed liquid hydrogen.

In one embodiment of the present application, the limiting part includes, but is not limited to, a limiting strip 13 extending to both sides in a middle part of the transmission rod 10, and the limiting strip 13 plays a role in limiting and draining. When the valve flap 11 rotates upwards, the valve flap can abut on the limiting strip 13 to realize a limiting function, so that an opening of the valve flap 11 can be kept less than 90°, for example, an angle range of the valve flap 11 can be 0° ~ ± 85° horizontally.

Alternatively, a surface on one side of the valve flap 11 back to the transmission rod 10 is provided with at least one reinforcing rib 12. By setting the reinforcing rib 12, a structural strength of the valve flap 11 is increased.

In one embodiment of the present application, the valve flap 11 is provided with two reinforcing ribs 12 opposite and at intervals, and the reinforcing ribs 12 make a center of gravity of the valve flap 11 further away from the rotating shaft 14, which is beneficial to speeding up a closing process of the valve flap.

Alternatively, when extending directions of the two valve claps 11 are in a straight line, the reinforcing ribs 12 on the two valve claps 11 abut against each other. When the pilot valve is closed, the reinforcing ribs 12 on the two valve flaps 11 abut against each other in pairs to ensure that the valve flaps 11 are in a horizontal state and cannot be turned down further. The reinforcing rib 12 provides a positioning function when the valve flap 11 is in a horizontal state.

In one embodiment of the present application, the reinforcing rib 12 is triangular. One right angle side of the triangle is connected with the valve flap 11, and the other right angle side of the triangle is used for positioning.

Alternatively, the limiting frame includes a limiting body and at least two fixing legs evenly distributed along the limiting body, the limiting body is provided with at least two guide holes 8 evenly distributed along the limiting body, and the guide rods are arranged in the guide holes 8. A gap is arranged between the adjacent fixing legs; and the limiting body is connected to a specified position through the fixing legs. The limiting body is connected to a specified position through the fixing legs. The designated location includes a position on the mounting flange 1 or the hydraulic compression cylinder 2. The limiting body defines a maximum moving position of the sealing valve 7, and the liquid can pass through the gap between the fixing legs, flow from the limiting body up and down, or flow in an opposite direction. The guide hole 8 provides a mounting space for the guide rod and ensures stable operation of the sealing valve 7. When the sealing valve 7 is opened, under the static pressure of the liquid hydrogen storage tank, the liquid hydrogen pushes open the valve flap 11 from the inlet channel 16 and then flows into the hydraulic compression cylinder 2 from a lower part of the sealing valve 7. The limiting body is far away from the inlet channel 16, which does not hinder the flow of the liquid hydrogen. After the sealing valve 7 is opened, a flow area of a peripheral channel of the sealing valve 7 is larger than that of the inlet channel 16, so the sealing valve 7 does not hinder the flow of the liquid hydrogen.

In one embodiment of the present application, the limiting body is provided with a plurality of claw-shaped fixing legs (for example, 3 to 8). The fixing leg may extend along a radial direction or an axial direction of the limiting body. The fixing leg is provided with a bolt hole 9, and is mounted and fixed on the hydraulic compression cylinder 2 or the mounting flange 1 through the bolt. The limiting body is provided with a plurality of (3 to 8) guide holes 8, and the guide rod passes through the guide hole 8. The limiting body is used to limit a movement range of the sealing valve 7. The limiting frame is provided with a large amount of space, which can allow the liquid hydrogen to freely flow through.

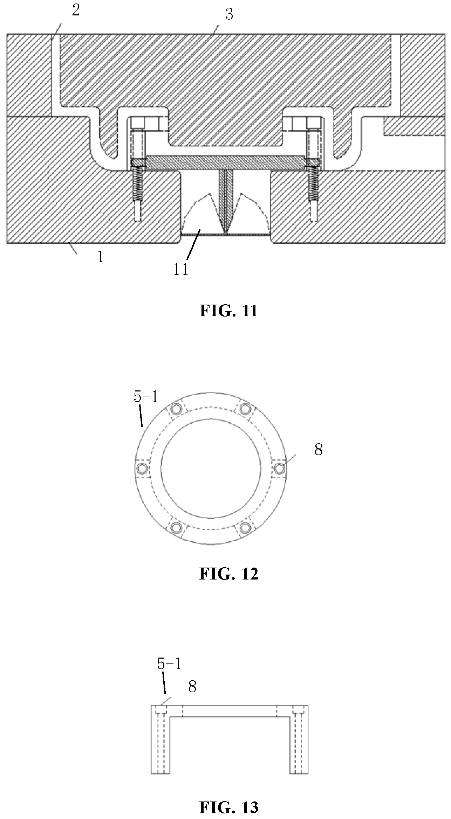

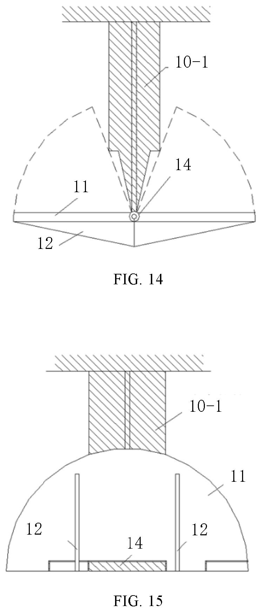

FIG. 9 is a schematic diagram showing a closed state of a check valve assembly adopted in a second embodiment of the present application. FIG. 10 is a schematic diagram showing an open state of the check valve assembly shown in FIG. 9. FIG. 11 is a schematic diagram showing a reset mode of the check valve assembly shown in FIG. 9. FIG. 12 is a schematic diagram of a limiting guide frame shown in FIG. 9. FIG. 13 is a side view of the limiting guide frame 5 shown in FIG. 12. FIG. 14 is a partial enlarged view of the sealing valve shown in FIG. 9 and the structure below the sealing valve. FIG. 15 is a side view of the sealing valve shown in FIG. 14 and the structure below the sealing valve. As shown in FIG. 9 to FIG. 15, the limiting guide frame 5 is provided with an avoidance hole.

Alternatively, the limiting body is provided with an avoidance hole. By setting the avoidance hole, the piston 3 can pass through the avoidance hole. When the piston 3 leaves the avoidance hole, the liquid hydrogen can flow through the avoidance hole. Moreover, it is helpful to reduce a clearance of a cylinder body of the hydraulic cylinder.

In one embodiment of the present application, the limiting guide frame 5 is a first limiting guide frame 5-1, and the first limiting guide frame 5-1 is provided with an avoidance hole.

Moreover, alternatively, the sealing valve 7 includes a sealing body and at least two moving legs evenly distributed along the sealing body, and the sealing body is provided with a pressure-bearing sealing surface 6; and the sealing body is movably connected to the guide rod through the moving leg. The sealing body reciprocates along the guide rod through the moving leg to adjust a distance between the pressure-bearing sealing surface 6 and the position to be sealed, and realizes a sealing function when the pressure-bearing sealing surface 6 is contacted with the position to be sealed. The sealing valve 7 is adopted to realize relatively simple structure and easy operation, reduces a driving difficulty and has a good sealing effect.

In one embodiment of the present application, a first transmission rod 10-1 is adopted as the transmission rod 10. The first transmission rod 10-1 includes, but is not limited to, a cross pulling rib, which has a larger width to limit the opening of the valve flap 11.

In one embodiment of the present application, the sealing valve 7 is a disc-shaped metal part, which plays a role in sealing and pressure bearing, and a thickness of the sealing valve can meet strength requirements under high pressure during sealing. A circumferential edge of the sealing valve 7 is provided with a plurality of (e.g. 3-8) moving legs, which can extend along a radial direction of the limiting body. The moving legs are provided with guide holes 8, and the moving legs are sleeved on the guide rod through the guide holes 8.

In one embodiment of the present application, a first limiting guide frame 5-1 is adopted as the limiting guide frame 5. The limiting body is provided with a plurality of (e.g. 3-8) claw-shaped fixing legs. The fixing leg can extend along the axial direction of the limiting body, and the fixing legs are provided with guide holes 8. The guide rod penetrates through the guide holes 8 and is installed and fixed on the hydraulic compression cylinder 2 or the mounting flange 1. The fixing leg, the guide hole 8 and the bolt hole 9 are integrated into one, and there is no need to additionally set a bolt hole 9 for fixing the limiting body, thus providing more flow space for the liquid hydrogen.

The following further introduces a use process of the check valve assembly.

The mounting flange 1 is connected between the hydraulic compression cylinder 2 and a liquid hydrogen storage tank. The mounting flange 1 is provided with an inlet channel 16, and the check valve assembly is arranged at the inlet channel 16, wherein the pilot valve is arranged near an inlet end of the liquid hydrogen storage tank, the sealing valve 7 is arranged near an outlet end of the hydraulic compression cylinder 2, and the position to be sealed is the outlet end. The open of the sealing valve 7 depends on a force of the spring 4, not a fluid force. When the hydraulic compression cylinder 2 starts to suck liquid hydrogen, the piston 3 in the hydraulic compression cylinder 2 is at a relative lower end of the hydraulic compression cylinder 2 and starts to move upward, and an internal pressure of the hydraulic compression cylinder 2 gradually decreases. When the pressure decreases to a threshold slightly greater than a static pressure of the liquid hydrogen storage tank, and a downward pressure of the hydraulic compression cylinder 2 on the sealing valve 7 is less than an upward elastic force of the elastic telescopic piece on the sealing valve 7. The sealing valve 7 moves upward to be contacted with the limiting body under the elastic force along the guide rod, and the sealing valve 7 unseals the inlet channel 16. The liquid hydrogen in the liquid hydrogen storage tank pushes the valve flap 11 of the pilot valve to rotate towards the transmission rod 10, so that the pilot valve is open, and the liquid hydrogen passes through the pilot valve and the sealing valve 7 in turn and is automatically pressed into the hydraulic compression cylinder 2. However, the pressure in the hydraulic compression cylinder is always greater than or equal to the static pressure of the liquid hydrogen storage tank, and the liquid hydrogen is at a saturation temperature. The elastic force provided by the elastic telescopic piece is slightly greater than a gravity of the sealing valve 7, which ensures automatic opening without affecting a time response when closing. In the short pause after the last stroke before the piston 3 compresses the liquid hydrogen, the pilot valve may automatically switch from the open state to the closed state, that is, the valve flap in the inclined state may rotate downward under the action of gravity, and the pilot valve may automatically close. When the liquid hydrogen is compressed, the piston 3 moves downwards from a top part of the hydraulic compression cylinder 2, and the liquid hydrogen flows downwards under the pushing of the piston 3. Because the pilot valve is in a closed state, the liquid hydrogen acts on the pilot valve, which makes the pilot valve move downwards, pulling the sealing valve 7 to move downwards against the elastic force of the elastic telescopic piece until the sealing valve 7 moves to the position to be sealed, thus forming a high-pressure resistant seal for the inlet channel 16. When the sealing valve 7 is closed, the pilot valve serves as the pilot valve of the sealing valve 7, which can adjust the elastic force and reduce a difficulty of opening and closing the sealing valve 7. At the same time, due to the early closing of the pilot valve, a leakage amount of the liquid hydrogen is reduced, and an excessive amount of liquid passing through the sealing valve 7 during the downward compression of the liquid hydrogen by the piston 3 is avoided.

When feeding liquid, the sealing valve 7 is relatively naturally opened under the action of the spring 4, and the liquid hydrogen enters the hydraulic compression cylinder 2 approximately without pressure loss, thus avoiding gasification caused by pressure drop and cavitation during compression. After the liquid feeding is completed, the pilot valve automatically falls under the action of gravity and switches from an open state to a closed state. When the liquid hydrogen is compressed, the pilot valve pulls the sealing valve 7 to fall quickly, and the sealing valve switches from an open state to a closed state, thus sealing the position to be sealed. In the transition process from liquid feeding to compression, that is, the sealing process of the sealing valve 7 from opening to closing, the leakage from the hydraulic compression cylinder 2 is the smallest, and a check valve performance is the best.

The present application further provides a liquid hydrogen pump mounting flange, including: a check valve assembly and a flange body.

As the check valve assembly mentioned above, the check valve assembly in any of the above embodiments may be adopted as the check valve assembly, which will not be described in detail here.

The mounting flange is provided with an inlet channel 16 extending along an axial direction, the inlet channel 16 includes an inlet end and an outlet end which are oppositely arranged, and the pilot valve and the sealing valve 7 of the check valve assembly are respectively arranged at the inlet end and the outlet end.

The mounting flange 1 is connected between the hydraulic compression cylinder 2 and a liquid hydrogen storage tank. The flange body is provided with an inlet channel 16, and the check valve assembly is arranged at the inlet channel 16, wherein the pilot valve is arranged near an inlet end of the liquid hydrogen storage tank, the sealing valve 7 is arranged near an outlet end of the hydraulic compression cylinder 2, and the position to be sealed is the outlet end. The open of the check valve assembly depends on a force of the spring 4, not a fluid force. The pressure in the hydraulic compression cylinder is always greater than or equal to the static pressure of the liquid hydrogen storage tank, and the liquid hydrogen at a saturation temperature may not vaporize, while zero vaporization ensures zero cavitation.

By adopting the liquid hydrogen pump mounting flange above, the check valve assembly not only replaces the fluid force by the elastic force to become the driving force for opening, so as to avoid cavitation affecting the service life, but also the closing speed of the check valve assembly is much faster than that of an existing check valve.

In one embodiment of the present application, an axial direction of the flange body is provided with an inlet channel 16, a radial direction of the flange body is provided with an outlet channel 15, and the outlet channel 15 is communicated with the inlet channel 16.

Alternatively, the pilot valve includes two valve flaps 11, and when extending directions of the two valve claps 11 are in a straight line, the valve flaps 11 have gaps with an edge of the inlet end. When the valve flap 11 is subjected to a force from bottom to top, the valve flap 11 flips upward from a horizontal position, transitioning into an open state. When the valve flap 11 is subjected to a force from bottom to top, the valve flap 11 flips upward from a vertical state, transitioning into a closed state. That is, extension directions of the two valve flaps 11 are in a straight line. A gap makes the pilot valve incompletely sealed, which avoids friction between the pilot valve and the inlet channel 16, thus reducing the driving difficulty. Moreover, the valve flap 11 is made of a nonmetallic light material, which is light enough. Under the lubrication of the liquid hydrogen, the valve flap 11 can freely rotate relative to the rotating shaft 14 without friction, and the force pushing the valve flap 11 to rotate is small enough. In this case, the driving force driving the pilot valve to open is small enough, and no pressure loss may occur.

As can be seen from the above description and practice, compared with the prior art, the check valve assembly and the liquid hydrogen pump mounting flange including same provided by the present application have the following advantages: the above check valve assembly is adopted, the check valve assembly includes the sealing valve and the pilot valve, and the pilot valve and the sealing valve are respectively arranged at the inlet end and the outlet end of the channel. When the pilot valve is closed, the elastic force of the elastic telescopic piece is overcome, and the sealing valve is pulled to move and seal the channel; when the pilot valve is opened, the elastic telescopic piece is in a reset state, and the sealing valve is moved upward to unseal the channel. The pilot valve serves as a pilot structure for closing the sealing valve, reducing a difficulty for the sealing valve for sealing the channel; due to weight and sensitivity differences between the pilot valve and the sealing valve, a difficulty of using the fluid force to push the pilot valve to move is less than a difficulty of directly pushing the sealing valve to move, while the closing of the pilot valve directly pulls the sealing valve to move downward. Therefore, the check valve assembly not only replaces the fluid force with the elastic force as a driving force for opening the sealing valve to avoid cavitation and affect the service life, but also the pilot valve drives the sealing valve to close much faster than an existing check valve. In addition, because the pilot valve is closed before the sealing valve, an amount of liquid hydrogen leaking from the hydraulic compression cylinder during the closing of the sealing valve is also less.

Those of ordinary skills in the art should understand that those described above are merely specific embodiment of the present application, but are not intended to limit the present application. Any modifications, equivalent replacements, improvements, and the like made without departing from the principle of the present application shall all fall in the scope of protection of the present application.

## Claims

1. A check valve assembly, comprising:
a pilot valve;
a limiting guide frame, wherein the limiting guide frame comprises a limiting frame and at least two guide rods which are evenly distributed along the limiting frame;
a sealing valve, wherein the sealing valve is movably connected to the guide rods, and is able to reciprocate along the guide rods and between the limiting frame and a position to be sealed; and
at least two elastic telescopic pieces, wherein the elastic telescopic pieces are sleeved on the guide rods, the sealing valve abuts against the elastic telescopic pieces, the sealing valve is transmittingly connected to the pilot valve, and the pilot valve is closed to adjust elastic forces of the elastic telescopic pieces, and drive the sealing valve to be closed.

2. The check valve assembly according to claim 1, wherein:
the pilot valve comprises a transmission rod and two valve flaps symmetrically arranged along the transmission rod, one end of the transmission rod is connected to the sealing valve, and the two valve flaps are both rotatably connected to the other end of the transmission rod.

3. The check valve assembly according to claim 2, wherein:
the transmission rod is provided with a limiting part, and the limiting part is used for limiting the valve flap to rotate within a preset range.

4. The check valve assembly according to claim 2 or 3, wherein:
a surface on one side of the valve flap back to the transmission rod is provided with at least one reinforcing rib.

5. The check valve assembly according to claim 4, wherein:
when extending directions of the two valve claps are in a straight line, the reinforcing ribs on the two valve claps abut against each other.

6. The check valve assembly according to any one of claims 1 to 3, wherein:
the limiting frame comprises a limiting body and at least two fixing legs evenly distributed along the limiting body, the limiting body is provided with at least two guide holes evenly distributed along the limiting body, and the guide rods are arranged in the guide holes; a gap is arranged between the adjacent fixing legs; and the limiting body is connected to a specified position through the fixing legs.

7. The check valve assembly according to claim 6, wherein:
the limiting body is provided with an avoidance hole.

8. The check valve assembly according to any one of claims 1 to 3, wherein:
the sealing valve comprises a sealing body and at least two moving legs evenly distributed along the sealing body, and the sealing body is provided with a pressure-bearing sealing surface; and the sealing body is movably connected to the guide rod through the moving leg.

9. A liquid hydrogen pump mounting flange, comprising:
the check valve assembly according to any one of claims 1 to 8; and
a mounting flange, wherein the mounting flange is provided with an inlet channel extending along an axial direction, the inlet channel comprises an inlet end and an outlet end which are oppositely arranged, and the pilot valve and the sealing valve of the check valve assembly are respectively arranged at the inlet end and the outlet end.

10. The liquid hydrogen pump mounting flange according to claim 9, wherein:
the pilot valve comprises two valve flaps, and when extending directions of the two valve claps are in a straight line, the valve flaps have gaps with an edge of the inlet end.
